## Europäisches Patentamt

## European Patent Office

## Office européen des brevets

(19)

(11) Veröffentlichungsnummer: **0 182 220**
**B1**

(12) **EUROPÄISCHE PATENTSCHRIFT**

(45) Veröffentlichungstag der Patentschrift: **25.04.90**

(51) Int. Cl.⁵: **A 01 C 7/04**

(21) Anmeldenummer: **85114213.3**

(22) Anmeldetag: **07.11.85**

(54) **Einzelkorn-Sävorrichtung zum Einbringen von Saatgut in eine Saatfurche.**

(30) Priorität: **15.11.84 DE 3441703**

(43) Veröffentlichungstag der Anmeldung:
**28.05.86 Patentblatt 86/22**

(45) Bekanntmachung des Hinweises auf die
Patenterteilung:
**25.04.90 Patentblatt 90/17**

(84) Benannte Vertragsstaaten:
**BE FR GB IT NL SE**

(56) Entgegenhaltungen:
**DE-A-1 657 359**
**DE-A-2 517 758**
**GB-A- 993 732**
**GB-A-2 057 835**
**US-A-3 048 132**
**US-A-3 659 746**

(73) Patentinhaber: **Franz Kleine Maschinenfabrik GmbH & Co.**
**Ferdinand-Henze-Strasse 2**
**D-4796 Salzkotten (DE)**

(72) Erfinder: **Syring, Klemens**
**Bachstrasse 5**
**D-4796 Salzkotten-Thüle (DE)**
Erfinder: **Flake, Eckard, Dr. Dipl.-Agrar-Ing.**
**Pater Tölle Strasse 8**
**D-4796 Salzkotten (DE)**

(74) Vertreter: **Patentanwälte Dipl.-Ing. Rudolf Bibrach Dipl.-Ing. Elmar Rehberg**
**Postfach 3162 Am Kirschberge 22**
**D-3400 Göttingen (DE)**

Courier Press, Leamington Spa, England.

**Beschreibung**

Die Erfindung bezieht sich auf eine Einzelkorn-Sävorrichtung mit den im Oberbegriff des Anspruchs 1 angegebenen Merkmalen.

Die DE—A—25 17 758 zeigt bereits eine derartige Einzelkorn-Sävorrichtung mit einem in einem Gehäuse umlaufenden Kammerrad zum Transport der Samenkörner aus einem Saatgutbehälter in die Saatfurche. Das stillstehend angeordnete Gehäuse weist auch bereits eine Führungsrinne auf, die zwischen einer sich im wesentlichen radial erstreckenden Scheibe und einer Haube gebildet wird, wobei die Haube in dem hier interessierenden Bereich eine schrägstehende Wandung aufweist, deren tiefster Punkt einseitig der Scheibe zugekehrt ist. Durch diesen tiefsten Punkt wird eine sich vertikal in Arbeitsrichtung erstreckende Ebene festgelegt, an der die Samenkörner tangentiel anliegen. Werden Samenkörner untgerschiedlicher Saatgutgrößen mit dieser Vorrichtung ausgesät, dann werden auch diese Saatgutkörner in unterschiedlichen Ebenen, je nach Saatgutdurchmesser, abgelegt werden, die alle parallel und mehr oder weniger entfernt von der Ebene angeordnet ist, die durch den tiefsten Punkt zwischen Haube und Scheibe festgelegt ist. Will man ein seitliches Verrollen nicht inkauf nehmen, dann ist es infolge dieses seitliches Versatzes erforderlich, das die Saatfurche bildende Schar in seiner Einstellung je nach den unterschiedlichen Saatgutgrößen korrigierend anzuordnen. Obwohl also hier bereits eine Führungsrinne am Gehäuse vorgesehen ist, gelingt es nicht, unterschiedliche Saatgutgrößen zentriert in einer gemeinsamen, sich vertikal in Arbeitsrichtung erstreckenden Ebene abzulegen. Durch das ungleichmäßige Aufnehmen unterschiedlicher Saatgutgrößen in der Führungsrinne und das dadurch bewirkte Verrollen ergeben sich ungleichmäßige Säabstände und erhebliche Samenverluste.

Aus der GB—A—2 057 835 ist eine Einzelkorn-Sävorrichtung bekannt, bei der das Gehäuse zylindrisch ausgebildet ist, welches die Umfangswandung des Kammerrads umgibt. Die Umfangswandung ist aufgelöst und wird durch eine Vielzahl von Finnen gebildet, die jede Kammer nach Art einer Mulde oder Vertiefung umgrenzen. Nach dem Herabfallen des vereinzelten Samenkorns in eine Kammer gleitet das Samenkorn bei der Bewegung des Kammerrads nach rückwärts gegen die Oberfläche der jeweiligen Finne. Hierdurch wird sichergestellt, daß der Säabstand zwischen der Samenkörnern konstantgehalten wird. Wenn dabei zusätzlich noch eine Zentrierwirkung eintritt, so kann diese nicht schon nach dem Herabfallen des Samenkorns in die Kammer erfolgen, sondern allenfalls erst dann, wenn der Kontakt zu der Finne des umlaufenden Kammerrads erfolgt ist.

Der Erfindung liegt die Aufgabe zugrunde, eine Einzelkorn-Sävorrichtung zu schaffen, mit der Samenkörner auch unterschiedlicher Saatgutgrößen mit dem gleichen Kammerrad und somit der gleichen Vorrichtung genau zu einer vertikal in Arbeitsrichtung verlaufenden Ebene zentriert in die Samenfurche eingebracht werden können.

Erfindungsgemäß wird dies durch die im Anspruch 1 angegebenen Merkmale erreicht. Die Führungsrinne ist nicht mehr im Gehäuse zwischen einer sich im wesentlichen radial erstreckenden Scheibe und einer schrägstehend angeordneten Haube gebildet, sondern befindet sich in dem die Umfangswandung des Kammerrads umschließenden Teil des Gehäuses. Die Führungsrinne erstreckt sich nach beiden Seiten symetrisch zu der vertikal in Arbeitsrichtung verlaufenden Ebene, so daß Samenkörner auch unterschiedlicher Saatgutgrößen jeweils zentriert zu dieser gemeinsamen Ebene bereits nach dem Herabfallen in die Kammer zentriert werden. Der tiefste Punkt der Führungsrinne ist in dieser Ebene angeordnet, so daß die Führungsrinne durch die Erstreckung nach beiden Seiten eine etwa dachförmige Gestalt besitzt.

Zusätzlich zu der Führungsrinne im Gehäuse kann in den Kammern die sich in der Umfangswandung des Kammerrads befinden und an denen sich beim Umlauf des Kammerrads die Samenkörner anlegen, eine weitere Vertiefung zur Aufnahme und Zentrierung der auszubringenden Samenkörner vorgesehen sein, deren tiefster Punkt ebenfalls in dieser Ebene angeordnet ist. Mit dieser weiteren Vertiefung wird eine zweite, die erste Zentrierung unterstützende Zentrierung erreicht, die nach dem Kontakt der Samenkörner mit der Umfangswandung des Kammerrads wirksam wird. Der Querschnitt der weiteren Vertiefung kann kreisbogenförmig oder winklig sein.

Die Erfindung wird anhand bevorzugter Ausführungsbeispiele weiter erläutert und beschrieben. Es zeigen:

Figur 1 eine Draufsicht auf eine Einzelkorn-Sävorrichtung, teilweise geschnitten,

Figur 2 einen Vertikalschnitt durch die Sävorrichtung gemäß der Linie II—II in Figur 1,

Figur 3 eine Teilansicht auf den Rand des Kammerrads mit einer weiteren Vertiefung und

Figur 4 eine ähnliche Darstellung wie Figur 3 bei einer weiteren Ausführungsmöglichkeit.

In einem Gehäuse 1 ist eine umlaufend angetriebenes Kammerrad 2 vorgesehen, welches mit einer Deckscheibe 3 abgedeckt ist. Die Deckscheibe 3 besitzt Saugöffnungen 4, vor denen die einzelnen Samenkörner 11 durch den unter der Deckscheibe 3 wirksamen Saugdruck festgehalten werden. Beim Umlauf des Kammerrads 2 werden die Samenkörmer 1 nacheinander durch einen Abstreicher 5 von der Deckscheibe 3 abgestrichen, so daß sie jeweils in eine zwischen Gehäuse 1 und Kammerrad 2 gebildete Kammer 6 fallen. Das Kammerrad 2 weist eine sich im wesentlichen in radialer Richtung erstreckende Scheibe 7 und eine Umfangswandung 8 auf, in der sich die Kammern (6) befinden, wobei sich die Umfangswandung 8 im wesentlichen in Umfangsrichtung erstreckt.

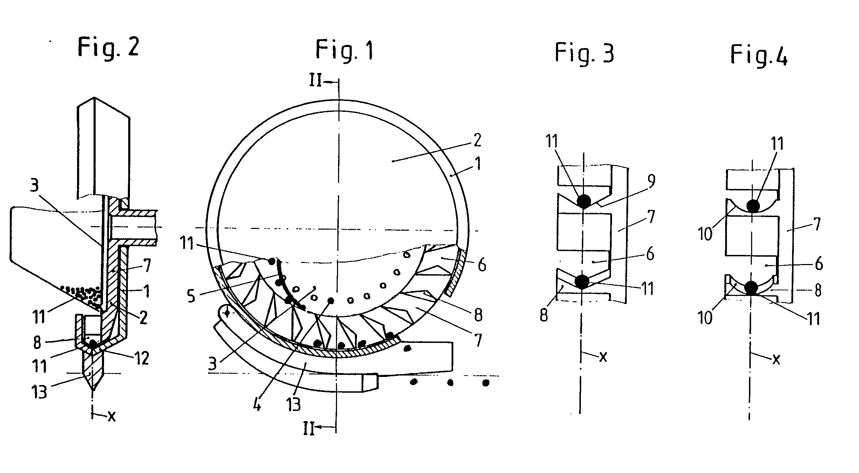

Wie aus Figur 2 erkennbar ist, ist in dem Teil des Gehäuses 1, welches die Umfangswandung 8 des Kammerrads 2 umschließt, eine Führungsrinne 12 vorgesehen, die mit ihrem tiefsten Punkt in einer sich vertikal in Arbeitsrichtung erstrekkenden Ebene x angeordnet ist und sich ausgehend von diesem tiefsten Punkt nach beiden Seiten von der Ebene erstreckt (Figur 2), so daß das einzelne, von dem Abstreicher 5 von der jeweiligen Saugöffnung 5 abgelöste einezelne Samenkorn 11 nach dem Herabfallen in die so gebildete Kammer entsprechend dem tiefsten Punkt in der Führungsrinne 12 des Gehäuses 1 zentriert wird. Die Zentrierung ist dabei so, daß auch Samenkörner unterschiedlicher Saatgutgröße zu dieser gemeinsamen Ebene x zentriert werden.

Anhand der Figuren 3 und 4 ist erkennbar, daß in der Umfangswandung 8 das Kammerrads 2 weitere Vertiefungen vorgesehen sein können. Figur 3 zeigt eine winklig verlaufende Vertiefung 9, deren tiefster Punkt ebenfalls in der Ebene x angeordnet ist. Figur 4 läßt eine kreisbogenförmige Vertiefung 10 erkennen, so daß auch hier die vereinzelten Samenkörner 11, wenn sie in Kontakt zu der Vertiefung 9, 10 kommen, eine zweites Mal zentriert werden. Die Vertiefungen 9, 10 können zusätzlich zu der Führungsrinne 12 am Gehäuse 1 vorgesehen sein. Auf diese Weise werden die vereinzelten Samenkörner 11 unabhängig von ihrer Größe immer genau zu der Ebene x und dem Furchenschar 13, welches die Saatfurche bildet, zentriert. Damit wird einerseits ein Verrollen in der Saatfurche vermieden und andererseits die Genauigkeit der Einhaltung des Säabstands begünstigt.

## Patentansprüche

1. Einzelkorn-Sävorrichtung zum Einbringen von Saatgut auch unterschiedlicher Saatgutgrößen in eine Saatfurche, mit einem in einem Gehäuse (1) umlaufenden Kammerrad (2) zum Transport der Samenkörner (11) aus einem Saatgutbehälter in die Saattfurche, wobei das Gehäuse (1) eine Führungsrinne (12) aufweist, dadurch gekennzeichnet, daß zur Zentrierung der durchlaufenden Samenkörner (11) auch unterschiedlicher Saatgutgrößen in einer vertikal in Arbeitsrichtung verlaufenden Ebene (x) die Führungsrinne (12) in dem die Umfangswandung (8) des Kammerrads (2) umschließenden Teil des Gehäuses (1) vorgesehen ist, die Führungsrinne (12) sich nach beiden seiten symetrisch zu Ebene (x) erstreckt und mit ihrem tiefsten Punkt in der Eben (x) angeordnet ist.

2. Einzelkorn-Sävorrichtung nach Anspruch 1, dadurch gekennzeichnet, daß zusätzlich zu der Führungsrinne (12) im Gehäuse (1), in den kammern (6), die sich in der Umfangswandung (8) des Kammerrads (2), befinden und an deren sich beim Umlauf des Kammerrads (2) die Samenkörner (11) anlegen, eine weitere Vertiefung (9, 10) zur Aufnahme und Zentrierung der auszubringenden Samenkörner (11) vorgesehen ist, deren tiefster Punkt ebenfalls in dieser Ebene (x) angeordnet ist.

3. Einzelkorn-Sävorrichtung nach Anspruch 2, dadurch gekennzeichnet, daß der Querschnitt der weiteren Vertiefung (9, 10) kreisbogenförmig oder winklig ist.

## Revendications

1. Semoir monograine destiné à la mise en place de semences, y compris des semences de grosseurs différentes, dans un sillon de semis, comportant dans un carter (1) un roue (2) à compartiments destinée au transport des graines (11) de semence à partir d'un récipient à semence jusque dans le sillon de semis, le carter (1) présentant une rigole (12) de guidage, caractérisé par le fait qu'en vue du centrage des graines (11) de semence traversant le semoir, y compris des graines de semence de grosseurs différentes, dans un plan vertical (x) s'étendant dans le sens de travail, la rigole de guidage (12) est située dans la partie du carter (1) qui entoure la paroi périphérique (8) de la roue (2) à compartiments, que la rigole de guidage (12) s'étend des deux côtés symétriquement par rapport au plan (x) et est disposée de façon telle que son point le plus bas se trouve dans le plan (x).

2. Semoir monograine selon la revendication 1, caractérisé par le fait qu'en plus de la rigole de guidage (12) située dans le carter, on prévoit, dans les compartiments (6) qui se trouvent dans la paroi périphérique (8) de la roue (2) à compartiments et sur lesquels s'appliquent les graines (11) de semence au cours de la rotation de la roue (2) à compartiments, une autre cavité (9, 10) destinée à recevoir et à centrer les graines (11) de semence qu'il s'agit de placer à l'extérieur, et dont le point le plus bas est également disposé dans ce plan (x).

3. Semoir monograine selon la revendication 2, caractérisé par le fait que la section transversale de l'autre cavité (9, 10) a une forme d'arc de cercle ou une forme angulaire.

## Claims

1. Individual-seed sowing device for the introduction of seed even of different seed sizes into a seed furrow, with a chambered wheel (2), which revolves in a housing (1), for the transport of the seed grains (11) from a seed container into the seed furrow, the housing (1) having a guide groove (12), characterized in that, for the centering of the seed grains (11), which pass through and may also be of different seed sizes, in a plane (x) which runs vertically in the direction of working, the guide groove (12) is provided in that part of the housing (1) which encloses the peripheral walling (8) of the chambered wheel (2), the guide groove (12) extends symmetrically on both sides of the plane (x) and is arranged with its deepest point in the plane (x).

2. Individual-seed sowing device according to Claim 1, characterized in that, in addition to the guide groove (12) in the housing (1), in the chambers (6), which are situated in the peripheral walling (8) of the chambered wheel (2) and against which the seed grains (11) come to bear upon revolution of the chambered wheel (2), an additional recess (9, 10) for receiving and centering the seed grains (11) to be distributed is provided, the deepest point of which is likewise arranged in this plane (x).

3. Individual-seed sowing device according to Claim 2, charcterized in that the cross-section of the additional recess (9, 10) has the shape of a circular arc or is angular.

Fig. 2

Fig. 1

Fig. 3

Fig. 4

EP 0 182 220 B1